# EUROPÄISCHE PATENTANMELDUNG

(11) **EP 0 893 309 A1**
(43) Veröffentlichungstag der Anmeldung: **27.01.1999**
(21) Anmeldenummer: 98110910.1
(22) Anmeldetag: 15.06.1998
(51) Int. Cl.: B60R 21/00, G01D 21/02

(54) **Kollisions-Sensor-Anordnung für Kraftfahrzeuge**

(30) Priorität: 26.07.1997 DE 19732302
(71) Anmelder: Volkswagen Aktiengesellschaft, 38436 Wolfsburg (DE)
(72) Erfinder: Zander, André, 38820 Halberstadt (DE); Mai, Rudolf, 38442 Wolfsburg (DE); Ensslen, Arnold, Dipl.-Ing., 38446 Wolfsburg (DE)

(57) **Zusammenfassung**

Die Erfindung betrifft eine Kollisions-Sensor-Anordnung für Kraftfahrzeuge zur Erfassung von Unfällen und zur Steuerung von Sicherheitskomponenten, die flächig an kollisionsgefährdeten Stellen des Kraftfahrzeuges angeordnet sind und ein zur Deformation abhängiges Ausgangssignal erzeugen, wobei die Kollisions-Sensoren als piezoelektrische und/oder piezoresistive Folien (1) ausgebildet sind.

## Beschreibung

Die Erfindung betrifft eine Kollisions-Sensor-Anordnung gemäß dem Oberbegriff des Patentanspruchs 1.

Aus der EP 775 613 ist eine Kollisions-Sensor-Anordnung zur Aktivierung passiver Sicherheitskomponenten wie z.B. Airbags und Sicherheitsgurte für Fahrzeuge bekannt, bei der einer oder mehrere Sensoren an Fahrzeugteilen angeordnet sind, die aufgrund der Deformation infolge einer Kollision eine elektrische Eigenschaft ändern, insbesondere ihren elektrischen Widerstand verändern. Überschreitet die Widerstandsänderung einen Schwellwert, so wird auf einen gefährlichen Zusammenstoß geschlossen und die passiven Sicherheitskomponenten ausgelöst. Des weiteren wird vorgeschlagen, mittels eines Kontrollers die Signale der Kollisions-Sensor-Anordnung mit denen von Beschleunigungssensoren oder Sitzbelegungserkennungssensoren zu verknüpfen. Ebenso ist es möglich, anhand der Größe der Widerstandsänderung auf die Schwere der Kollision zu schließen. Die Sensoren sind vorzugsweise in Dünnfilmtechnik ausgebildet. Ein besonderer Vorteil der bekannten Kollisions-Sensor-Anordnung liegt in der Kombination mit einem oder mehreren Beschleunigungssensoren. Dadurch wird sichergestellt, daß eine Sicherheitskomponente nur ausgebildet wird, falls sowohl eine Deformation als auch eine abrupte Änderung der Geschwindigkeit erfaßt wird, so daß z.B. der Airbag weder durch schlechte Straßenverhältnisse noch durch einen Tritt gegen das parkende Fahrzeug ausgelöst wird. Nachteilig an der bekannten Kollisions-Sensor-Anordnung ist, neben der relativ langsamen Schaltzeit der Sensoren, deren aufwendige Fertigung, die einen Einsatz in der stark automatisierten Fertigung von Kraftfahrzeugen erschwert.

Der Erfindung liegt daher das technische Problem zugrunde, eine Kollisions-Sensor-Anordnung zu schaffen, die insbesondere einfach in bestehende Fertigungsprozesse integrierbar ist und mit möglichst wenig Anpassungen an verschiedenen geformten Fahrzeugteilen anordbar ist.

Die Lösung des technischen Problems ergibt sich durch die Merkmale des Patentanspruchs 1. Dabei sind piezoelektrische Folien bereits aus der Luft- und Raumfahrttechnik bekannt, wo diese beispielsweise zur Strömungsanalyse von Turbinenleiträdern Anwendung finden. Die Folie läßt sich einfach auf kompliziert geformten Fahrzeugteilen aufbringen, wobei nach Bedarf eine Vielzahl unterschiedlicher Foliendicken zur Verfügung stehen. Dies zusammen erlaubt die Ausbildung der Kollisions-Sensor-Anordnung mit nur einer einzigen Sensortechnologie. Bei geeigneter Metallisierung beispielsweise mit Gold, können diese piezoelektrischen Folien in aggressiven flüssigen oder gasförmigen Strömungsmedien eingesetzt werden. Daher benötigen diese auch keinerlei zusätzliche Passivierungen oder ähnliches, was wiederum deren Handhabbarkeit vereinfacht. Des weiteren sind die Signalzeiten der piezoelektrischen Folien geringer als von piezoelektrischen Widerständen, die über entsprechende Meßbrücken ausgewertet werden müssen. Weitere vorteilhafte Ausgestaltungen der Erfindung ergeben sich aus den Unteransprüchen.

Die Erfindung wird nachfolgend anhand eines bevorzugten Ausführungsbeispiels näher erläutert. Die einzige Figur zeigt ein Blockschaltbild der Kollisions-Sensor-Anordnung.

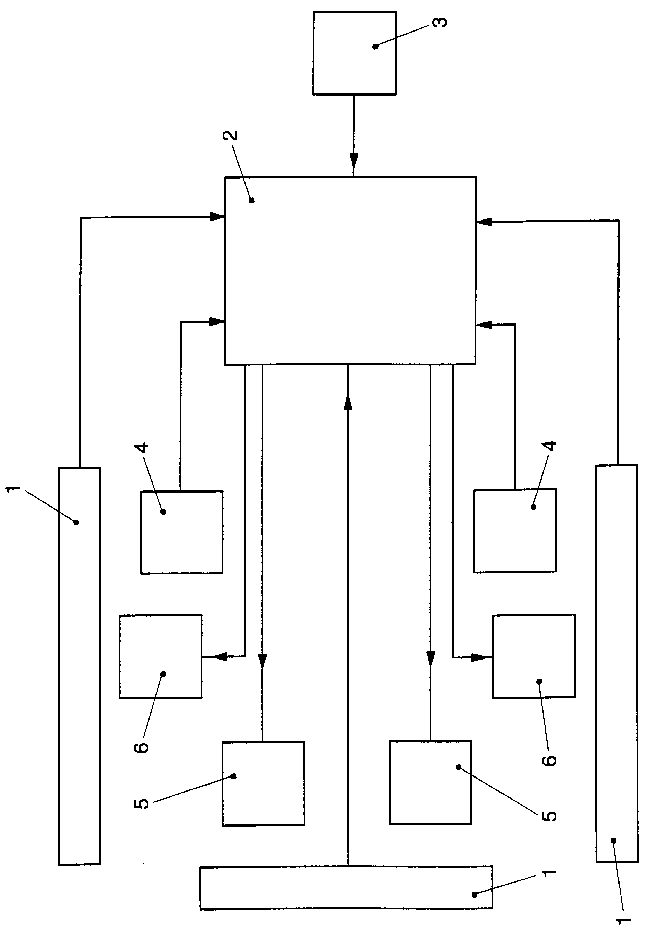

In der Fig. 1 ist ein Blockschaltbild der Kollisions-Sensor-Anordnung für den vorderen Bereich eines Kraftfahrzeuges dargestellt, wobei um das Fahrzeug herum piezoelektrische Folien 1 angeordnet sind, deren Signalanschlüsse mit einem Steuergerät 2 verbunden sind. Die Verbindung zwischen den piezoelektrischen Folien 1 und dem Steuergerät 2 kann über eine Zweidrahtleitung oder ein Eindraht-Bussystem erfolgen. Das Steuergerät 2 erhält zusätzlich Signale von einem Beschleunigungssensor 3 und Sitzplatzerkennungssensoren 4. Das Steuergerät 2 ist über Steuerleitungen mit Frontalairbags 5 und Seitenairbags 6 verbunden. Die piezoelektrischen Folien 1 bestehen aus einem durchsichtigen Film aus hochpolarisiertem Polyvinylidenfluorid, der an den Außenflächen metallisch beschichtet ist. Die piezoelektrischen Folien 1 können auf verschiedene Weise und an unterschiedlichen Stellen an den kollisionsgefährdeten Fahrzeugteilen angeordnet sein. So können diese beispielsweise seitlich in den Zierleisten des Kraftfahrzeuges angeordnet sein, so daß aufgrund des geringen mechanischen Widerstandes eine hohe Sensitivität gewährleistet ist, andererseits der ästhetische Gesamteindruck des Kraftfahrzeuges nicht gestört wird. Ebenso ist es möglich, die piezoelektrischen Folien 1 auf der Außenseite der Fahrzeugteile unterhalb des Lackes aufzubringen, was eine hohe Sensitivität zur Folge hat, jedoch Signaldurchführungen ins Innere des Kraftfahrzeuges zum Steuergerät 2 erforderlich macht. Daher können die piezoelektrischen Folien auch an der Innenseite der Fahrzeugteile angeordnet werden, falls sichergestellt ist, daß eine äußere Deformation sicher detektiert wird. Im vorderen und hinteren Bereich des Kraftfahrzeuges bieten sich insbesondere die Stoßfänger als Anbringungsort an, wobei die piezoelektrischen Folien 1 sowohl an der Innen- als auch der Außenseite angeordnet werden können. An den Seiten des Kraftfahrzeuges bieten sich vor allem Kotflügel, Tür und Radaufhängung als Anbringungsort an. Die Ausbildung der piezoelektrischen Folien 1 kann sowohl großflächig als auch teilflächig sein. Bei der großflächigen Ausbildung kann genauer ein möglicher Deformationsprozeß detektiert werden, was beispielsweise eine gezielte Ansteuerung der Airbags erlaubt, jedoch einen erhöhten Signaldatenanfall zur Folge hat. Wird hingegen nur eine Information bezüglich des Vorhandenseins einer Kollision benötigt, so reichen wenige an neuralgischen Stellen der Fahrzeugteile angeordnete kleine piezoelektrische Folien 1 aus. Des weiteren können die piezoelektrischen Folien auch derart ausgebildet sein, daß bereits eine interne Signalaufbereitung im Sensor stattfindet.

Detektiert nun beispielsweise die vordere piezoelektrische Folie 1 eine Deformation, so gibt diese ein der Größe der Deformation entsprechendes Signal an das Steuergerät 2 ab. Überschreitet das Signal einen vorgegebenen Schwellwert, so kann dies als Anzeichen für eine sicherheitsrelevante Kollision angenommen werden. Um aber sicherzustellen, daß es sich nicht nur um beispielsweise einen Fußtritt gegen den Stoßdämpfer handelt, wird vom Steuergerät 2 überprüft, ob der Beschleunigungssensor 3 ebenfalls eine Beschleunigung erfaßt hat. Ist dies der Fall, so kann mit Sicherheit eine sicherheitsrelevante Kollision vermutet werden, und die Frontal-Airbags 5 sollten ausgelöst werden. Mittels der Sitzbelegungserkennungssensoren 4 wird nun festgestellt, ob und wie das Kraftfahrzeug besetzt ist, so daß nur die Frontal-Airbags ausgelöst werden, deren zugeordnete Plätze belegt sind. Da bei seitlichen Kollisionen nur eine äußerst geringe Knautschzone zur Verfügung steht, kann vorgesehen sein, daß die Schwellwerte für die seitlich angeordneten piezoelektrischen Folien 1 niedriger eingestellt werden. Das gleiche gilt für den Schwellwert für den Beschleunigungssensor 3.

## Patentansprüche

1. Kollisions-Sensor-Anordnung für Kraftfahrzeuge zur Erfassung von Unfällen und zur Steuerung von Sicherheitskomponenten, die flächig an kollisionsgefährdeten Stellen des Kraftfahrzeuges angeordnet sind und ein zur Deformation abhängiges Ausgangssignal erzeugen,
**dadurch gekennzeichnet, daß**
die Kollisions-Sensoren als piezoelektrische und/oder piezoresistive Folien (1) ausgebildet sind.

2. Kollisions-Sensor-Anordnung nach Anspruch 1, dadurch gekennzeichnet, daß die piezoelektrischen Folien (1) aus Polyvinylidenfluorid ausgebildet sind.

3. Kollisions-Sensor-Anordnung nach Anspruch 1 oder 2, dadurch gekennzeichnet, daß die piezoelektrischen und/oder piezoresistive Folien (1) mindestens teilweise an der Innenseite der kollisionsgefährdeten Stellen angeordnet sind.

4. Kollisions-Sensor-Anordnung nach einem der vorangegangenen Ansprüche, dadurch gekennzeichnet, daß die piezoelektrischen und/oder piezoresistiven Folien (1) mindestens teilweise an der Außenseite unterhalb des Lackes angeordnet sind.

5. Kollisions-Sensor-Anordnung nach einem der vorangegangenen Ansprüche, dadurch gekennzeichnet, daß die piezoelektrischen und/oder piezoresistiven Folien (1) an den Stoßfängern und/oder den Radaufhängungen angeordnet sind.

6. Kollisions-Sensor-Anordnung nach einem der vorangegangenen Ansprüche, dadurch gekennzeichnet, daß der Kollisions-Sensor-Anordnung mindestens ein Beschleunigungssensor (3) und/oder Sitzplatzerkennungssensor (4) zugeordnet ist, die voneinander abhängig mindestens teilweise Sicherheitskomponenten ansteuern.

7. Piezoelektrische Folie, dadurch gekennzeichnet, daß diese als Kollisionssensor für Kraftfahrzeuge verwendet wird.

8. Piezoresistive Folie, dadurch gekennzeichnet, daß diese als Kollisionssensor für Kraftfahrzeuge verwendet wird.
